# FASCICULE DE BREVET EUROPEEN

(11) **EP 0 308 016 B1**
(45) Date de publication et mention de la délivrance du brevet: **15.12.1993**
(21) Numéro de dépôt: 88201962.3
(22) Date de dépôt: 08.09.1988
(51) Int. Cl.: F16K 39/04, F16K 3/02, B01D 35/14

(54) **Vanne à coulisse pour conduites de liquide ou de gaz**
Schieberventil für Flüssigkeits- oder Gasleitungen
Sliding valve for liquid or gas conduits

(30) Priorité: 17.09.1987 BE 8701050
(43) Date de publication de la demande: 22.03.1989
(73) Titulaire: S.Mc.D. Murphy & Partners Ltd., Dublin 3 (IE)
(72) Inventeur: Van de Moortele, Guido, B-2610 Antwerpen Wilrijk (BE)
(74) Mandataire: Donné, Eddy

(56) Documents cités:
- EP-A- 0 176 867
- WO-A-85/04700
- US-A- 4 372 531

## Description

L'invention concerne une vanne à coulisse pourvue ou non d'un régulateur de pression pour conduites de liquide ou de gaz.

On connaît une vanne à coulisse destinée à arrêter des liquides, des gaz ou des vapeurs circulant dans des conduites ou à en régler la quantité qui passe. Dans son cas, dans le corps de la vanne pourvue d'un canal d'amenée et d'un canal d'évacuation est placée une coulisse qui est coulissable de bas en haut et de haut en bas contre un ou deux sièges de clapet.

Cette vanne à coulisse a toutefois pour inconvénient que, quand elle est fermée, la coulisse est pressée contre le siège de clapet par la pression du liquide ou du gaz qui entre, de sorte que pour l'ouverture de la coulisse une puissante force de frottement doit être surmontée qui est proportionnelle à la différence de pression qui agit sur la coulisse, par suite de quoi la force de mouvement nécessaire au déplacement de la coulisse dépend dans une large mesure de la pression présente. Un autre inconvénient est que, quand soudain une trop grande différence de pression est créée dans le liquide ou le gaz, une force de choc est exercée contre la coulisse, par suite de quoi une fracture peut s'y produire. Encore un autre inconvénient est le fait qu'à cette vanne connue la coulisse est pressée contre le clapet de siège uniquement par la différence de pression, par suite de quoi en cas d'absence d'un moyen de pression comme un ressort, lors d'une faible différence de pression, une fuite peut se produire.

Selon une première mode d'exécution la vanne de l'invention comprend principalement un corps faisant partie d'un ensemble fermé; un canal d'amenée qui débouche dans ledit corps et est raccordé à la conduite d'amenée de liquide ou de gaz; une chambre de passage à deux parois situées l'une en face de l'autre et logées dans ledit ensemble fermé; un canal d'évacuation qui débouche d'un côté dans la chambre de passage et qui est raccordé de l'autre côté à la conduite d'évacuation du liquide ou du gaz; dans au moins une desdites parois de la chambre de passage une ouverture qui met le corps en communication avec la chambre de passage, la chambre de passage, à l'exception de ladite ouverture, respectivement lesdites ouvertures, étant étanche vis à vis ledit ensemble; un corps de clapet qui est logé de façon mobile entre lesdites deux parois et qui coopère avec ladite ou les dites ouvertures permettant l'obturation du passage entre ledit corps et la chambre de passage, le corps du clapet présentant une ouverture transversale; une tige mobile à laquelle ledit corps de clapet est fixé; un moyen pour mouvoir cette tige, au moins un élément d'arrêt en matière dure entre ledit corps de clapet et ladite paroi à ouverture d'une part et l'autre paroi d'autre part; et au moins un élément élastique pour pousser le ou les éléménts d'arrêt en contact avec le corps de clapet précité d'une manière étanche à l'eau et au gaz; les sections des ouvertures dans les parois de la chambre de passage et dans le corps du clapet étant choisies de telle façon que, en position fermée de la vanne, la résultante des forces latérales exercées sur le corps de clapet est zéro.

Selon une deuxième mode d'exècution la vanne de l'invention comprend principalement un corps faisant partie d'un ensemble fermé; un canal d'amenée qui débouche dans ledit corps et est raccordé à la conduite d'amenée de liquide ou de gaz; une chambre de passage à deux parois situées l'une en face de l'autre et logées dans ledit ensemble fermé; un canal d'évacuation qui débouche d'un côté dans la chambre de passage et qui est raccordé de l'autre côté à la conduite d'évacuation du liquide ou du gaz; dans lesdites parois de la chambre de passage au moins une paire d'ouvertures localisées de façon opposée qui met le corps en communication avec la chambre de passage, la chambre de passage, à l'exception desdites ouvertures étant étanche vis à vis ledit ensemble; un corps de clapet qui est logé de façon mobile entre lesdites deux parois et qui coopère avec ladite paire d'ouvertures permettant l'obturation desdites ouvertures; une tige mobile à laquelle ledit corps de clapet est fixé; un moyen pour mouvoir cette tige, une paire d'au moins un élément d'arrêt en matière dure entre ledit corps de clapet et les dites parois à ouverture; et une paire d'au moins un élément élastique pour pousser les éléménts d'arrêt en contact avec le corps de clapet précité d'une manière étanche à l'eau et au gaz; les sections des ouvertures dans les parois de la chambre de passage étant choisies de telle façon que, en position fermée de la vanne, la resultante des forces latérales exercées sur le corps de clapet est zéro.

Par le fait que dans la position fermée du corps de clapet la pression du liquide ou du gaz entrant agit sur les deux côtés du corps de clapet, il se crée un équilibre, par suite duquel le corps de clapet est déplaçable indépendamment de la pression. Cet effet devient encore plus nettement perceptible quand le corps de clapet est perforé, de sorte que dans la position fermée de celui-ci le liquide ou le gaz peut librement passer à travers. En outre, en cas de production soudaine d'une différence de pression, le corps de clapet ne sera pas soumis à un choc, de sorte que la fracture de ce corps sera évitée.

A titre d'exemple, sans aucun caractère limitatif, une description plus détaillée d'une forme choisie de réalisation d'une vanne avec régulateur de pression conforme à l'invention suit ci-dessous.

Cette description renvoie aux dessins annexés, dans lesquels :
la fig. 1 représente une coupe verticale de la vanne à régulateur de pression en position ouverte;

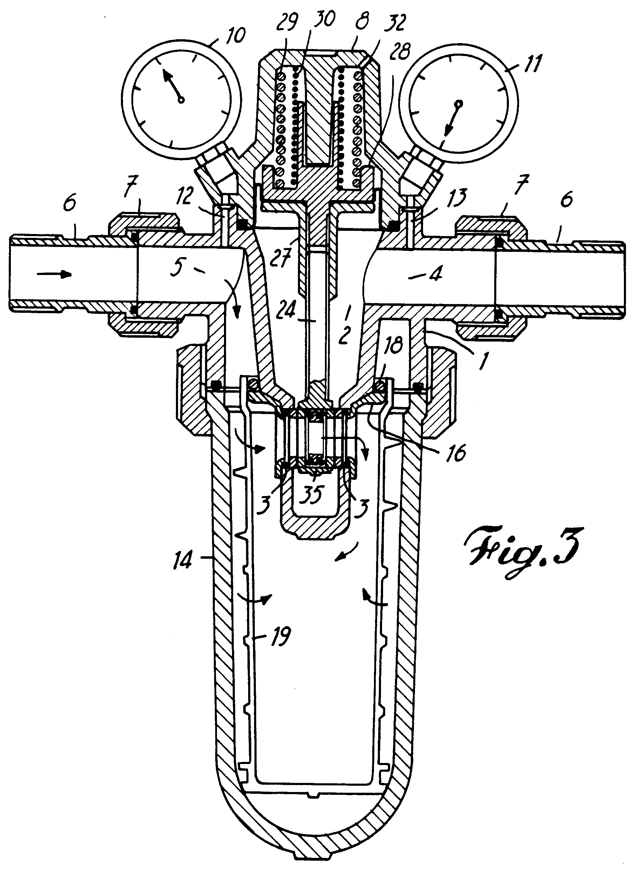

la fig. 2 représente une coupe verticale agrandie de la partie clapet proprement dite de la vanne;
la fig. 3 représente une coupe verticale de la vanne à régulateur de pression en position fermée;
la fig. 4 représente une coupe transversale verticale de la vanne à régulateur de pression, dans un plan perpendiculaire au plan de la coupe transversale représentée dans la fig. 1.

Dans ces figures on remarque le corps 1 de la vanne avec la chambre de passage 2, qui est pourvue en bas de deux parois parallèles, dans lesquelles sont aménagées deux ouvertures 3 situées l'une en face de l'autre. En haut, la chambre de passage 2 a un canal d'évacuation 4. Le corps 1 possède en haut un canal d'amenée 5, de sorte qu'un liquide ou un gaz entrant par ce canal d'amenée dans le corps est détourné via les ouvertures 3, la chambre de passage 2 et le canal d'évacuation 4 et est évacué. Sur le canal d'amenée 5 et le canal d'évacuation 4 respectivement, un raccord à vis 6 est attaché au moyen d'un écrou d'accouplement 7, auxquels raccords à vis sont raccordés respectivement une conduite d'amenée et une conduite d'évacuation (non représentées) d'une conduite d'eau ou de gaz. La partie supérieure ouverte du corps 1 est fermée au moyen d'une tête creuse 8 fixée sur le corps 1 au moyen de vis 9. Sur ladite tete 8 sont montés deux manomètres, respectivement 10 et 11, qui via une perforation, respectivement 12-13, sont en communication avec le canal d'amenée 5 et le canal d'évacuation 4 respectivement, de sorte que la pression du liquide ou du gaz qui entre et qui sort peut être contrôlée. La partie inférieure du corps 1 est fermée au moyen d'une cloche 14, qui est fixée sur le corps 1 au moyen d'un écrou d'accouplement 15. En bas, le corps a une partie rétrécie, dont les deux parois plates parallèles avec les ouvertures 3 y prévues font partie. Autour de cette partie rétrécie est fixée une armature 16 à deux ouvertures 17 à bord profilé, lesquelles ouvertures de l'armature s'adaptent auxdites ouvertures 3, de sorte que l'armature est suffisamment serrée. Autour de cette armature un filtre 19 est serré par l'intermédiaire d'un anneau d'étanchéité 18, de sorte que le liquide ou le gaz est obligé de passer par ce filtre avant d'être évacué par le canal d'évacuation 4. Dans chaque ouverture 3 du corps 1 est également aménagé avec du jeu un élément de fermeture circulaire 20 en céramique dure de préférence, qui par l'intermédiaire d'un élément élastique circulaire 21 s'appuie contre le côté intérieur du bord profilé de l'ouverture adjacente 17 de l'armature 16 que l'élément en question est axialement déplaçable et qu'une bonne étanchéité est obtenue. Avec chaque élément annulaire d'arrêt 20 opère un élément annulaire d'arrêt 22, de préférence en céramique dure, et qui fait partie du corps de clapet 35 proprement dit. Ces éléments annulaires d'arrêt sont logés dans une ouverture 23 de la tête d'une tige 24 déplaçable en hauteur. Chaque élément annulaire d'arret est poussé contre son élément annulaire d'arrêt 20 respectif par un élément annulaire élastique 25, qui est placé entre cet élément annulaire d'arrêt et un anneau intermédiaire 26 placé dans ladite tête de la tige 24 déplaçable en hauteur. Par les éléments annulaires élastiques 21 et 25 les éléments annulaires d'arrêt 20 et 22 sont fortement poussés l'un contre l'autre, et ce quelle que soit la position des éléments d'arret 22 par rapport aux éléments d'arrêt 20. Une fermeture parfaite est donc possible grâce à cela. Du fait qu'aucune différence de pression ne peut être exercée par le liquide ou le gaz entrant sur le corps de clapet 35 proprement dit, sans que celui-ci soit soutenu, une rupture des éléments d'arrêt en cas de différence de pression intervenant brusquement n'est pas à craindre et la force de mouvement pour le déplacement en hauteur du corps de clapet 35 ne dépend pas de la différence de pression. En haut, la tige 24 déplaçable en hauteur est fixée dans un organe de serrage 27, qui à son tour est fixé sur une culasse creuse 28. Entre cette culasse creuse et la tête 8 sont placés deux ressorts de pression, respectivement 29-30, dont la puissance de pression est choisie de manière telle que le clapet ne peut fermer que quand le liquide ou le gaz entrant atteint une pression déterminée. Cette partie de la vanne sert donc de régulateur de pression. Entre la tête 8 et la culasse 28 est placée une membrane 31, qui sépare complètement l'espace dans la tête creuse 8 de celui du corps 1. L'espace dans ladite tête est en communication avec l'atmosphère par une forure 32 prévue dans la tête. Par une cheville de guidage 33 faisant partie de la tête glisse librement une boîte de guidage 34 faisant partie de la culasse 28, de sorte que la culasse est efficacement guidée pendant son déplacement.

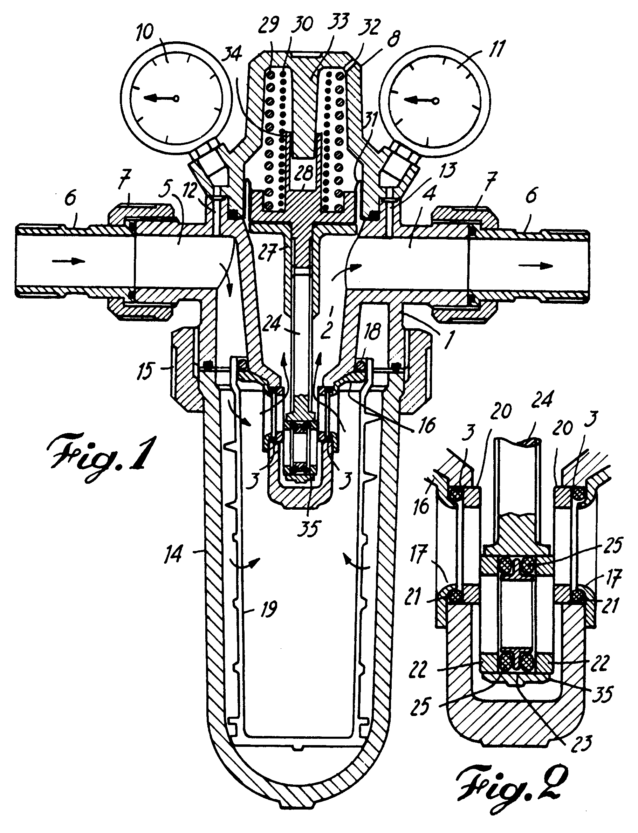

Quand la pression du liquide ou du gaz entrant est plus faible que la pression exercée par les ressorts de pression 29-30, ceux-ci poussent la culasse 28, la tige 24 et le corps de clapet 35 vers le bas (fig. 1), de sorte que le liquide ou le gaz passe librement par le canal d'amenée 5, par le filtre 19, par les ouvertures 3-17, par la chambre de passage 2 du corps 1 et par le canal d'évacuation 4.

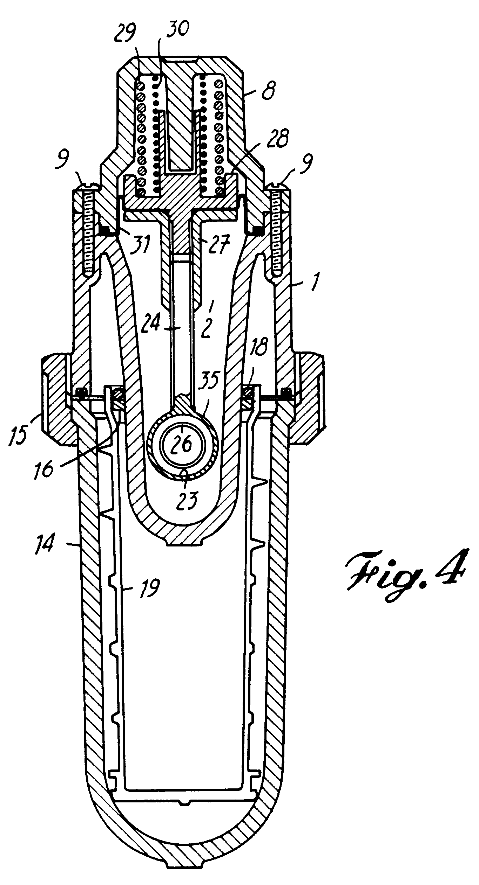

Mais quand la pression du liquide ou du gaz entrant dans la vanne devient plus forte que la pression exercée par le ressort de pression 29-30 logé dans la tête 8, le liquide ou le gaz exercera une telle pression sur la surface inférieure de l'organe de serrage 27 que la tige 24 avec le corps de clapet 35 y attaché sont déplacés vers le haut, jusqu'à ce que les éléments annulaires d'arrêt 22 recouvrent les éléments annulaires d'arrêt 20 et que le liquide ou le gaz ne peut plus passer par la chambre de passage 2 du corps 1 vers le canal d'évacuation 4, mais continue à passer ordinairement par les éléments annulaires d'arrêt 20, les éléments d'arrêt 22 et l'anneau intermédiaire 26 (fig. 3). Les éléments annulaires d'arrêt 22 en céramique dure et les éléments d'arrêt 20, qui sont pressés l'un contre l'autre par les élements annulaires élastiques 21 et 25, tandis que leur déplacement l'un par rapport à l'autre sans frottement exagéré reste possible, assurent une fermeture parfaite.

Quand alors la pression du liquide ou du gaz diminue de nouveau, les ressorts de pression 29-30 pousseront de nouveau le corps de clapet 35 vers le bas et le liquide ou le gaz passe de nouveau librement par la vanne et le canal d'évacuation.

## Revendications

1. Vanne pour conduites de liquide ou de gaz comprenant principalement un corps (1) faisant partie d'un ensemble fermé; un canal d'amenée (5) qui débouche dans ledit corps et est raccordé à la conduite d'amenée de liquide ou de gaz; une chambre de passage (2) à deux parois situées l'une en face de l'autre et logées dans ledit ensemble fermé; un canal d'évacuation (4) qui débouche d'un côté dans la chambre de passage (2) et qui est raccordé de l'autre côté à la conduite d'évacuation du liquide ou du gaz; dans au moins une desdites parois de la chambre de passage (2) une ouverture (3) qui met le corps en communication avec la chambre de passage, la chambre de passage (2), à l'exception de ladite ouverture (3), respectivement lesdites ouvertures (3), étant étanche vis à vis ledit ensemble; un corps de clapet (35) qui est logé de façon mobile entre lesdites deux parois et qui coopère avec ladite ou les dites ouvertures permettant l'obturation du passage entre ledit corps (1) et la chambre de passage (2), le corps (35) du clapet présentant une ouverture transversale; une tige mobile (24) à laquelle ledit corps de clapet est fixé; un moyen (28) pour mouvoir cette tige, au moins un élément d'arrêt (20-22) en matière dure entre ledit corps de clapet (35) et ladite paroi à ouverture (3) d'une part et l'autre paroi d'autre part; et au moins un élément élastique (21-25) pour pousser le ou les éléménts d'arrêt (20-22) en contact avec le corps de clapet (35) précité d'une manière étanche à l'eau et au gaz; les sections des ouvertures dans les parois de la chambre de passage (2) et dans le corps (35) du clapet étant choisies de telle façon que, en position fermée de la vanne, la résultante des forces latérales exercées sur le corps de clapet (35) est zéro.

2. Vanne pour conduites de liquide ou de gaz, comprenant principalement un corps (1) faisant partie d'un ensemble fermé; un canal d'amenée (5) qui débouche dans ledit corps et est raccordé à la conduite d'amenée de liquide ou de gaz; une chambre de passage (2) à deux parois situées l'une en face de l'autre et logées dans ledit ensemble fermé; un canal d'évacuation (4) qui débouche d'un côté dans la chambre de passage (2) et qui est raccordé de l'autre côté à la conduite d'évacuation du liquide ou du gaz; dans lesdites parois de la chambre de passage (2) au moins une paire d'ouvertures (3) localisées de façon opposée qui met le corps en communication avec la chambre de passage (2), cette chambre de passage (2), à l'exception desdites ouvertures (3) étant étanche vis à vis ledit ensemble; un corps de clapet (35) qui est logé de façon mobile entre lesdites deux parois et qui coopère avec ladite paire d'ouvertures permettant l'obturation desdites ouvertures; une tige mobile (24) à laquelle ledit corps de clapet est fixé; un moyen (28) pour mouvoir cette tige, une paire d'au moins un élément d'arrêt (20-22) en matière dure entre ledit corps de clapet (35) et les dites parois à ouverture (3); et une paire d'au moins un élément élastique (21-25) pour pousser les éléménts d'arrêt (20-22) en contact avec le corps de clapet (35) précité d'une manière étanche à l'eau et au gaz; les sections des ouvertures (3) dans les parois de la chambre de passage (2) étant choisies de telle façon que, en position fermée de la vanne, la résultante des forces latérales exercées sur le corps de clapet (35) est zéro.

3. Vanne selon la revendication 1 ou 2, caractérisée en ce que les éléments d'arrêt (20-22) sont axialement déplaçables.

4. Vanne selon la revendication 1 ou 2, 3 caractérisée en ce que les éléments d'arrêt (20-22) et les éléments élastiques (21-25) ont une surface active de grandeur approximativement égale.

5. Vanne selon la revendication 1 ou 2 à 4, caractérisée en ce que dans chaque ouverture (3) de la chambre de passage (2) est placée une armature (16) à ouverture (17), l'élément d'arrêt (20) étant annulaire et l'élément élastique (21) également annulaire étant placé entre l'armature (16) et l'élément d'arrêt (20) pour exercer une pression axiale sur cet élément.

6. Vanne selon la revendication 1, caractérisée en ce que ledit corps de clapet (35) comprend une tête avec une ouverture (23) munie à chacune de ses extrémités d'un élément annulaire d'arrêt (22) en matière dure et dans laquelle est placé un anneau intermédiaire (26) contre lequel s'appuient les éléments annulaires élastiques (25) pour pousser les éléments annulaires d'arrêt (22) contre des éléments annulaires d'arrêt (20) adjacents.

7. Vanne selon la revendication 1 ou 2 à 6, caractérisé en ce que les éléments d'arrêt (20-22) sont fabriqués en céramique dure.

8. Vanne selon la révéndication 1 ou 2 à 7, caractérisée en ce que la tige mobile (24) est attachée à une culasse (28) placée dans la partie supérieure de la chambre de passage (2), une membrane (31) étant placée entre la chambre de passage (2) et la culasse pour l'obturation de ladite chambre de passage (2), et au moins un ressort de pression (29-30) est placé entre la culasse (28) et la partie supérieure de la vanne.

9. Vanne selon la revendication 8, caractérisée en ce que le corps de la vanne est couvert d'une tête (8) à cheville de guidage (33) pour guider une boîte de guidage (34), qui fait partie de la culasse (28).

10. Vanne selon la revendication 1 ou 2 à 9, caractérisée en ce que sur le canal d'amenée (5) et sur le canal d'évacuation (4) un manomètre (10-11) est monté pour mesurer la pression du liquide ou du gaz respectivement entrant et sortant.

## Claims

1. Valve for liquid or gas conduits mainly comprising a body (1) which is part of an enclosed unit; an inlet channel (5) which opens into said body and is connected to the liquid or gas inlet conduit; a passage chamber (2) with two partitions situated one opposite to the other and lodged in said closed unit; an outlet channel (4) which opens out on one side into the passage chamber (2) and which is connected on the other side to the liquid or gas outlet conduit; in at least one of said chamber partitions an opening (3) which connects the body with the passage chamber, the passage chamber (2), with the exclusion of said opening (3), said openings (3) respectively, being fitted watertight to said unit; a seat valve body (35) which is lodged in a loose way between said two partitions and which works in conjunction with said opening(s), thus enabling the sealing of the passage between said body (1) and the passage chamber (2), whereby the seat valve body (35) has a transversal opening; a mobile rod (24) onto which said seat valve body is mounted; a means (28) to move this rod, at least one stop device (20-22) made of hard material between said seat valve body (35) and said partition with an opening (3) on one side and the other partition on the other side; and at least one elastic device (21-25) to push said stop devices (20-22) in contact with the above-mentioned seat valve body (35) in a watertight and gastight manner; the opening sections in the partitions of the passage chamber (2) and in the seat valve body (35) are selected such that, in the valve's closed position, the outcome of the lateral forces exercised on the seat valve body (35) is nihil.

2. Valve for liquid or gas conduits mainly comprising a body (1) which is part of an enclosed unit; an inlet channel (5) which opens into said body and is connected to the liquid or gas inlet conduit; a passage chamber (2) with two partitions situated one opposite to the other and lodged in said closed unit; an outlet channel (4) which opens out on one side into the passage chamber (2) and which is connected on the other side to the liquid or gas outlet conduit; in said partitions of the passage chamber (2) at least one set of openings (3) situated opposite to one another and which connect the body to the passage chamber (2), the passage chamber (2), with the exclusion of said openings (3), being fitted watertight to said unit; a seat valve body (35) which is lodged in a loose way between said two partitions and which works in conjunction with said set of openings, thus enabling the sealing of said openings; a mobile rod (24) onto which said seat valve body is mounted; a means (28) to move this rod, one set of at least one stop device (20-22) made of hard material between said seat valve body (35) and said partitions with openings (3); and a set of at least one elastic device (21-25) to push said stop devices (20-22) into contact with the above-mentioned seat valve body (35) in a watertight and gastight manner; the opening sections (3) in the partitions of the passage chamber (2) are selected such that, in the valve's closed position, the outcome of the lateral forces exercised on the seat valve body (35) is nihil.

3. Valve according to claim 1 or 2, characterized in that the stop devices (20-22) can be moved axially.

4. Valve according to claim 1 or 2, 3, characterized in that the stop devices (20-22) and the elastic devices (21-25) have an active surface of approximately the same size.

5. Valve according to claim 1 or 2 to 4, characterized in that in each opening (3) of the passage chamber (2) is placed a frame (16) with an opening (17), whereby the stop device (20) is ring-shaped and the elastic device (21) is also ring-shaped and fitted between the frame (16) and the stop device (20) in order to exercise an axial pressure on this device.

6. Valve according to claim 1, characterized in that said seat valve's body (35) comprises a head with an opening (23) provided at both ends with a ring-shaped stop device (22) made of hard material and in which is fitted an intermediate ring (26) against which the elastic ring-shaped devices (25) are pressed in order to push the ring-shaped stop devices (22) against the adjacent ring-shaped devices (20).

7. Valve according to claim 1 or 2 to 6, characterized in that the stop devices (20-22) are made of hard ceramics.

8. Valve according to claim 1 or 2 to 7, characterized in that the mobile rod (24) is fitted to a head joint (28) placed in the upper part of the passage chamber (2), whereby a membrane (31) is fitted between the passage chamber (2) and the head joint in order to seal said passage chamber (2), and at least one pressure spring (29-30) is placed between the head joint (28) and the upper part of the valve.

9. Valve according to claim 8, characterized in that the valve's body is covered with a head (8) with a guide bolt (33) in order to guide a guiding bush (34), which forms part of the head joint (28).

10. Valve according to claim 1 or 2 to 9, characterized in that a manometer (10-11) is mounted on the inlet channel (5) and on the outlet channel (4) in order to measure the pressure of the liquid or gas, respectively entering or leaving.

## Patentansprüche

1. Schieberventil für Flüssigkeits- oder Gasleitungen, hauptsächlich enthaltend ein Gehäuse (1), das einen Teil einer geschlossenen Einheit darstellt; einen Zufuhrkanal (5), der in besagtes Gehäuse mündet und der an die Flüssigkeits- oder Gaszufuhrleitung angeschlossen ist; eine Durchlaßkammer (2) mit zwei Wänden, die einander gegenüber angeordnet sind und in besagter geschlossener Einheit untergebracht sind; einen Auslaßkanal (4), der an einer Seite in die Durchlaßkammer (2) mündet und der an der anderen Seite an die Flüssigkeits- oder Gasabflußleitung angeschlossen ist; in wenigstens einer der besagten Wände der Durchlaßkammer (2) eine Öffnung (3), die das Gehäuse mit der Durchlaßkammer verbindet, wobei die Durchlaßkammer (2), mit Ausnahme von besagter Öffnung (3) bzw. besagten Öffnungen (3) in Bezug zur besagten Einheit dicht ist; einen Ventilkörper (35), der beweglich zwischen den besagten zwei Wänden angebracht ist und der mit besagter Öffnung oder besagten Öffnungen zusammenwirkt, wobei dieser es gestattet, den Durchlaß zwischen besagtem Gehäuse (1) und der Durchlaßkammer (2) abzuschließen, und wobei der Ventilkörper (35) eine Queröffnung aufweist; eine bewegliche Stange (24), woran der besagte Ventilkörper befestigt ist; ein Mittel (28), um diese Stange zu bewegen, mindestens ein Abschließelement (20-22) aus hartem Material zwischen dem besagten Ventilkörper (35) und der besagten mit der besagten Öffnung (3) versehenen Wand einerseits und der anderen Wand andererseits; und mindestens ein elastisches Element (21-25), um das Abschließelement oder die Abschließelemente (20-22) wasser- und gasdicht in Kontakt mit dem vorgenannten Ventilkörper (35) zu drücken; wobei die Querschnitte der Öffnungen in den Wänden der Durchlaßkammer (2) und in dem Ventilkörper (35) so gewählt sind, daß in geschlossener Position des Ventils die Summe der Seitenkräfte, die auf den Ventilkörper (35) ausgeübt werden, gleich null ist.

2. Ventil für Flüssigkeits- oder Gasleitungen, enthaltend in der Hauptsache ein Gehäuse (1), das einen Teil einer geschlossenen Einheit darstellt; einen Zufuhrkanal (5), der in besagtes Gehäuse mündet und der an die Flüssigkeits- oder Gaszufuhrleitung angeschlossen ist; eine Durchlaßkammer (2) mit zwei Wänden, die einander gegenüber angeordnet und in besagter geschlossener Einheit untergebracht sind; einen Auslaßkanal (4), der an einer Seite in die Durchlaßkammer (2) mündet und der an der anderen Seite an die Flüssigkeits- oder Gasabflußleitung angeschlossen ist; in besagten Wänden der Durchlaßkammer (2) mindestens ein Paar einander gegenüberliegender Öffnungen (3), welches das Gehäuse mit der Durchlaßkammer (2) in Verbindung setzt, wobei diese Durchlaßkammer (2), mit Ausnahme besagter Öffnungen (3), in Bezug zur besagten Einheit dicht ist; einen Ventilkörper (35), der beweglich zwischen den beiden besagten Wänden angebracht ist und der mit besagtem Öffnungspaar zusammenwirkt, wobei dieser es gestattet, besagte Öffnungen abzuschließen; eine bewegliche Stange (24), woran der besagte Ventilkörper befestigt ist; ein Mittel (28), um diese Stange zu bewegen, ein Paar von jeweils mindestens einem Abschließelement (20-22) aus hartem Material zwischen dem besagten Ventilkörper (35) und den besagten, mit der Öffnung (3) versehenen Wänden; und ein Paar von jeweils mindestens einem elastischen Element (21-25), um die Abschließelemente (20-22) wasser- und gasdicht in Kontakt mit dem vorgenannten Ventilkörper (35) zu drücken; wobei die Querschnitte der Öffnungen (3) in den Wänden der Durchlaßkammer (2) so gewählt sind, daß in geschlossener Position des Ventils die Summe der Seitenkräfte, die auf den Ventilkörper (35) ausgeübt werden, gleich null ist.

3. Ventil gemäß Anspruch 1 oder 2, dadurch gekennzeichnet, daß die Abschließelemente (20-22) axial verschiebbar sind.

4. Ventil gemäß Anspruch 1 oder 2, 3, dadurch gekennzeichnet, daß die Abschließelemente (20-22) und die elastischen Elemente (21-25) eine aktive Oberfläche von nahezu gleicher Größe aufweisen.

5. Ventil gemäß Anspruch 1 oder 2 bis 4, dadurch gekennzeichnet, daß in jeder Öffnung (3) der Durchlaßkammer (2) eine Armatur (16) mit einer Öffnung (17) angebracht ist, wobei das Abschließelement (20) ringförmig ist und das ebenfalls ringförmige elastische Element (21) zwischen der Armatur (16) und dem Abschließelement (20) angebracht ist, um einen axialen Druck auf dieses Element auszuüben.

6. Ventil gemäß Anspruch 1, dadurch gekennzeichnet, daß besagter Ventilkörper (35) einen Kopf mit einer Öffnung (23) aufweist, die an jedem ihrer Enden mit einem ringförmigen Abschließelement (22) aus hartem Material versehen ist und worin ein Zwischenring (26) angebracht ist, gegen welchen die ringförmigen elastischen Elemente (25) stützen, um die ringförmigen Abschließelemente (22) gegen die benachbarten ringförmigen Abschließelemente (20) zu drücken.

7. Ventil gemäß Anspruch 1 oder 2 bis 6, dadurch gekennzeichnet, daß die Abschließelemente (20-22) aus Hartkeramik hergestellt sind.

8. Ventil gemäß Anspruch 1 oder 2 bis 7, dadurch gekennzeichnet, daß die bewegliche Stange (24) an einem Joch (28) befestigt ist, das im oberen Teil der Durchlaßkammer (2) angebracht ist, wobei eine Membrane (31) zwischen der Durchlaßkammer (2) und dem Joch zum Abschließen der besagDurchlaßkammer (2) und dem Joch zum Abschließen der besagten Durchlaßkammer (2) angebracht ist, und wobei mindestens eine Druckfeder (29-30) zwischen dem Joch (28) und dem oberen Teil des Ventils angebracht ist.

9. Ventil gemäß Anspruch 8, dadurch gekennzeichnet, daß der Ventilkörper mit einem Kopf (8) mit Führungsbolzen (33) zum Führen einer Führungsbuchse (34), welche einen Teil des Jochs (28) bildet, abgedeckt ist.

10. Ventil gemäß Anspruch 1 oder 2 bis 9, dadurch gekennzeichnet, daß auf dem Zufuhrkanal (5) und auf dem Auslaßkanal (4) ein Manometer (10-11) zum Messen des Drucks der ein- bzw. ausströmenden Flüssigkeit oder des Gases montiert ist.
